# EUROPÄISCHE PATENTSCHRIFT

(11) **EP 2 488 826 B1**
(45) Veröffentlichungstag und Bekanntmachung des Hinweises auf die Patenterteilung: **08.05.2013**
(21) Anmeldenummer: 11758134.8
(22) Anmeldetag: 08.07.2011
(51) Int. Cl.: G01C 15/00, G02B 7/00

(54) **LASERAUSRICHTVORRICHTUNG**
LASER ALIGNMENT DEVICE
DISPOSITIF D'ALIGNEMENT DE LASER

(30) Priorität: 08.12.2010 DE 202010016360 U
(43) Veröffentlichungstag der Anmeldung: 22.08.2012
(73) Patentinhaber: MAHA Maschinenbau Haldenwang GmbH & Co. KG, 87490 Haldenwang (DE)
(72) Erfinder: SCHÄFER, Frank, 79808 Weilheim (DE); ECKERT, Felix, 79774 Albbruck-Kuchelbach (DE)
(74) Vertreter: Wagner, Kilian
(86) Internationale Anmeldenummer: PCT/EP2011/061675
(87) Internationale Veröffentlichungsnummer: WO 2012/076197

(56) Entgegenhaltungen:
- EP-A1- 0 459 111
- JP-A- 2006 138 970

## Beschreibung

Die Erfindung betrifft eine Laserausrichtvorrichtung gemäß dem Oberbegriff des Anspruchs 1, umfassend Haltemittel zum Halten eines Lasers sowie Ausrichtmittel zum Justieren der Haltemittel. Ferner betrifft die Erfindung die Verwendung eines Torsionskörpers sowie von Zug- und/oder Druckmittel zum Justieren eines, vorzugsweise in Haltemitteln gehaltenen, Lasers sowie ein Justierverfahren zum Justieren von einem in Haltemitteln gehaltenen Laser gemäß Anspruch 16.

Bisher werden Laser im Industriebereich mit Hilfe von Ausrichtvorrichtungen ausgerichtet (justiert), bei denen die den Laser haltenden Haltemitteln mit Hilfe von Rändelschrauben relativ zu einer starren Halteeinrichtung verstellt werden. Häufig umfassen bekannte Laserausrichtvorrichtungen Lineareinheiten zum linearen Verstellen der Haltemittel. Derartige Laserausrichtvorrichtungen sind kostenintensiv und die erreichbare Vibrationssicherheit zur Vermeidung einer unbeabsichtigten Dejustierung ist stark verbesserungsbedürftig.

Aus der JP 2006/138970 A ist eine Laserausrichtvorrichtung zum Justieren eines in Haltemitteln dieser Vorrichtung gehaltenen Lasers bekannt. Die Haltemittel umfassen einen Körper sowie Schrauben mit denen zwei Abschnitte des Körpers durch Kraftbeaufschlagung so relativ zueinander verformbar sind, dass der Körper um eine gedachte Ausrichtachse biegbar ist.

Ausgehend von dem vorgenannten Stand der Technik liegt der Erfindung die Aufgabe zugrunde, eine alternative, einfach aufgebaute und kostengünstig bereitstellbare Laserausrichtvorrichtung anzugeben, die sich bevorzugt durch eine erhöhte Vibrationssicherheit und eine reproduzierbare Einstellbarkeit auszeichnet. Ferner besteht die Aufgabe darin ein vereinfachtes Ausrichtverfahren (Justierverfahren) anzugeben.

Diese Aufgabe wird hinsichtlich der Laserausrichtvorrichtung mit den Merkmalen des Anspruchs 1 bzw. durch eine Verwendung gemäß Anspruch 15 gelöst. Hinsichtlich des Verfahrens wird die Aufgabe mit den Merkmalen des Anspruchs 16 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als Verfahrengemäß offenbart gelten und beanspruchbar sein. Ebenso sollen verfahrensgemäß offenbarte Merkmale als vorrichtungsgemäß offenbart gelten und beanspruchbar sein.

In Abkehr bekannter Laserausrichtvorrichtungen mit kostenintensiven Lineareinheiten sieht eine nach dem Konzept der Erfindung ausgebildete Laserausrichtvorrichtung einen Torsionskörper vor, der sich mit Hilfe von Zug- und/oder Druckmitteln um eine gedachte Ausrichtachse, bevorzugt elastisch, tordieren lässt. Besonders bevorzugt ist der Torsionskörper derart ausgeführt, dass er ein von dem Physiker Hook beschriebenes linear-elastisches Verhalten aufweist. Das Hooksche-Gesetz beschreibt dabei das elastische Verhalten von Festkörpern, deren elastische Verformung proportional zur einwirkenden Belastung ist. Dieses Verhalten ist insbesondere typisch für Metalle bei relativ kleinen Belastungen. Aufgrund des Vorsehens eines mittels Zug- und/oder Druckmitteln tordierbaren Körpers kann auf die kostenintensive Lineareinheiten zur Feinjustierung von Lasern verzichtet werden, wodurch insgesamt die Kosten im Vergleich zu bekannten Vorrichtungen deutlich reduziert sind. Darüber hinaus ist durch das Vorsehen eines vergleichsweise starren Torsionskörpers eine gute Vibrationssicherheit (Sicherung gegen eine Dejustierung durch Vibrationen) gegeben, insbesondere bei einer später noch zu erläuternden Ausführungsform mit von zwei unterschiedlichen Richtungen auf einem Mittelabschnitt verstellbaren Druck- und/oder Zugmitteln.

Der Erfindung liegt also der Gedanke zugrunde zur Feinjustierung des Lasers einen in sich, insbesondere elastisch, in sich verdrehbaren Torsionskörper vorzusehen, der, wie später noch erläutert werden wird, bevorzugt einteilig mit den Haltemitteln ausgebildet oder alternativ fest mit den Haltemitteln verbindbar ist, derart, dass eine Torsion des Torsionskörpers eine, vorzugsweise rotatorische, Verstellbewegung der Haltemittel und damit des Lasers zur Folge hat. Besonders vorteilhaft ist es, wenn der Torsionskörper derart mit den Zug- und/oder Druckmitteln verbindbar ist, das eine Verdrehung des Torsionskörpers um die Ausrichtachse aus einem Winkelbereich zwischen mindestens 0,5° und 1,5°, bevorzugt zwischen 0,5° und 3,0° in zumindest oder ausschließlich eine Torsionsrichtung, vorzugsweise in zwei einander entgegengesetzten Torsionsrichtungen möglich ist. Bevorzugt sind die Haltemittel, wie später noch erläutert werden wird, derart angeordnet, dass ein in diesen gehaltener, vorzugsweise stabförmiger Laser um eine senkrecht zur Laserstrahlachse orientierte Achse verschwenkbar ist.

Besonders bevorzugt ist eine Ausführungsvariante der Vorrichtung, bei der die Ausrichtachse (Tordierachse) winklig zu einer die Laserstrahlrichtung des Lasers bestimmenden Halteachse angeordnet ist. Bevorzugt verläuft die Ausrichtachse, zumindest näherungsweise rechtwinklig zu einer Laserstrahlrichtung eines in den Haltemitteln gehaltenen Lasers.

Bevorzugt fällt die Ausrichtachse mit einer Längsachse des Torsionskörpers zusammen.

In Weiterbildung der Erfindung ist mit Vorteil vorgesehen, dass die Zug - und/oder Druckmittel derart angeordnet sind, dass mit diesen der Torsionskörper zum einen tordierbar und zum anderen bei entsprechender Betätigung der Zug- und/oder Druckmittel derart verformbar ist, dass die Haltemittel parallel verstellbar sind. Unter parallel verstellbar wird dabei verstanden, dass eine vorzugsweise mit einer Laserstrahlachse zusammenfallende oder zu dieser parallele, Halteachse durch eine entsprechende Verstellung der Zug- und/oder Druckmittel parallel verschoben wird. Erreicht werden kann dies beispielsweise durch das Vorsehen von zwei, insbesondere exzentrisch, in Bezug auf die Ausrichtachse, angeordneten Stellschrauben, die zwei Abschnitte des Torsionskörpers so relativ zueinander verstellen (verformen), dass die gewünschte Parallelverschiebung resultiert. Bevorzugt lässt sich der Torsionskörper hierbei um mindestens 1,0 mm, weiter bevorzugt um mindestens 1,5 mm, noch weiter bevorzugt um mindestens 3,0 mm in zumindest oder ausschließlich eine Richtung, bevorzugt jeweils in zwei einander entgegengesetzte Richtungen auslenken. Wird nur eine der beiden Stellschrauben betätigt, resultiert anstelle einer Parallelverschiebung des in den Haltemittel gehaltenen Lasers eine Torsion des Torsionskörpers und damit ein Verschwenken einer Laserstrahlachse um eine bevorzugt senkrecht zu dieser orientierten, (gedachten) Schwenkachse.

Um einen elastisch tordierbaren, dem Hookschen-Gesetz gehorchenden Torsionskörper zu erhalten ist es besonders bevorzugt, wenn dieser aus Metall, beispielsweise aus einer Aluminiumlegierung ausgebildet ist, wobei die mindestens zwei relativ zueinander verstellbaren bzw. mittels der Zug- und/oder Druckmittel mit einer Zug- oder Druckkraft beaufschlagbaren Abschnitte über eine Aussparung im, bevorzugt einstückigen (einteiligen) Torsionskörper voneinander beabstandet sind. Um eine bevorzugt elastische Torsion des Torsionskörpers um eine gedachte Ausrichtachse (Tordierachse) zu erreichen, ist es besonders bevorzugt, wenn die Zug- und/oder Druckmittel an zumindest einem der über diese relativ zueinander verstellbaren Abschnitte außerhalb einer die Ausrichtachse aufnehmenden Ebene angreifen, wobei es sich bei dieser Ebene bevorzugt um eine Symmetrieachse des Torsionskörpers handelt. Wesentlich ist die Anordnung mindestens eines Zug- und/oder Druckmittels mit Radialabstand zur Ausrichtachse. Um den Körper mit Hilfe der Zug- und/oder Druckmittel nicht nur um die vorgenannten Ausrichtachse zu tordieren, sondern alternativ so verformen zu können, dass eine Parallelverschiebung der Haltemittel resultiert, ist es bevorzugt, wenn zu beiden Seiten der vorgenannten Ebene, insbesondere der Symmetrieebene, insbesondere gleich beabstandet, jeweils ein Zug- und/oder Druckmittel beispielsweise in Form eines Schraubelementes angeordnet, wobei bevorzugt durch gleichmäßiges Verstellen beider Zug- und/oder Druckmittel (in die selbe Richtung) eine Parallelverschiebung und durch Verstellen ausschließlich eines der Zug- und/oder Druckmittel oder unterschiedlich starkes Verstellen der beiden Zug- und/oder Druckmittel eine Torsion des Torsionskörpers erfolgt. Anders ausgedrückt sind bevorzugt zu zwei Seiten der Ausrichtachse (jeweils zu dieser beabstandet) Zug- und/oder Druckmittel vorgesehen.

Wie zuvor bereits angedeutet ist es besonders zweckmäßig, wenn die Zug - und/oder Druckmittel mindestens ein Schraubelement umfassen, wobei es besonders bevorzugt ist, wenn insgesamt mehr als ein Schraubelement vorgesehen ist. Im Hinblick auf die Anordnung bzw. die Art des in Wechselwirkung Tretens des mindestens einen Schraubelementes mit den mindestens zwei relativ zueinander verformbaren Abschnitten gibt es unterschiedliche Möglichkeiten. Besonders zweckmäßig ist es, wenn das Schraubelement in einen ersten der Abschnitte in einem entsprechenden Gewinde, vorzugsweise einem Innengewinde gehalten ist. Die Kraftübertragung auf diesen ersten Abschnitt erfolgt also bevorzugt über das Gewinde. Im Hinblick auf das in Wechselwirkung Treten mit dem weiteren (zweiten) Abschnitt gibt es unterschiedliche Alternativen. Gemäß einer ersten Alternative stützt sich das Schraubelement, vorzugsweise an einer Außenfläche des zweiten Abschnittes ab, wobei in diesem Fall nur Druckkräfte übertragen werden können. Gemäß einer alternativen Ausführungsform greift das Schraubelement in ein Gewinde des zweiten Abschnittes ein, sodass alternativ Zug- oder Druckkräfte übertragen werden, wobei die Kraftübertragung auf den zweiten Abschnitt über das Gewinde erfolgt.

Wie ebenfalls bereits ausgeführt ist es besonders zweckmäßig, wenn insgesamt nicht nur ein einziges Schraubelement vorgesehen ist, sondern mindestens zwei Schraubelemente, ganz besonders bevorzugt insgesamt vier Schraubelemente. Als besonders Vorteilhaft hat es sich erwiesen, um eine möglichst feine Justierbarkeit zu gewährleisten, wenn insgesamt drei, vorzugsweise bei Nichtkraftbeaufschlagung durch die Zug- und/oder Druckmittel parallele, relativ zueinander verstellbare Abschnitte vorgesehen sind, wobei bevorzugt ein mittlerer der Abschnitte sandwichartig zwischen den äußeren zum mittleren Abschnitt beabstandeten Abschnitten angeordnet ist. Noch weiter bevorzugt ist es, wenn der mittlere Abschnitt als eine Art Zunge ausgebildet ist, also ein freies Ende aufweist. Ideal ist es nun, wenn der mittlere Abschnitt von zwei voneinander abgewandten Seiten mit Hilfe von insbesondere als Schraubelemente ausgebildeten Zug- und/oder Druckmitteln Druck- und Zugkraft beaufschlagbar ist, wobei bevorzugt insgesamt vier Schraubelemente vorgesehen sind und/oder jeweils zwei einander gegenüberliegende Schraubelemente in axialer Richtung miteinander fluchten. Eine derartige Konstruktion ist besonders gegen ein Lösen der Schrauben durch Vibrationen gesichert, da die Zug - und/oder Druckelemente, insbesondere die Schraubelemente durch ein Verklemmen von der gegenüberliegenden Seite quasi automatisch gesichert sind, wodurch ein Lösen durch Vibrationen sehr unwahrscheinlich ist.

Besonders zweckmäßig ist es, wenn die relativ zueinander mit Hilfe der Zug - und/oder Druckmittel verstellbaren Abschnitte des Torsionskörpers einteilig ausgebildet sind und über mindestens eine Aussparung voneinander beabstandet sind, wobei es besonders bevorzugt ist, auch im Falle des Vorsehens mehrerer relativ zueinander verstellbarer Abschnitte, wenn sämtliche Abschnitte über eine gemeinsame Aussparung voneinander beabstandet sind. Im Falle des Vorsehens von drei relativ zueinander verstellbaren Abschnitten kann dies beispielsweise durch eine in der Seitenansicht U-förmige Aussparung realisiert werden, die sich um ein freies Ende des mittleren Abschnittes herum erstreckt und bevorzugt zwei, zumindest näherungsweise, vorzugsweise exakt parallele Schenkel aufweist.

Wie Eingangs bereits erläutert gibt es im Hinblick auf die konkrete Anordnung der Haltemittel relativ zu dem Torsionskörper unterschiedliche Möglichkeiten. Zur Erzielung minimierter Kosten und einer minimierten Montagezeit ist es bevorzugt, wenn die Haltemittel einteilig mit dem Torsionskörper ausgebildet sind, also aus einem Block, insbesondere einem Metallblock, geschaffen sind. Alternativ ist es denkbar, dass Torsionskörper und Haltemittel jeweils eine Kontaktfläche bereit stellen, an denen die Haltemittel an den Torsionskörper anlegbar und an diesem unbeweglich, d.h. starr fixierbar sind, derart, dass eine Torsion des Torsionskörpers ein Verschwenken der Haltemittel um die gedachte Ausrichtachse zur Folge hat.

In Weiterbildung der Erfindung ist mit Vorteil vorgesehen, dass die Laserausrichtvorrichtung neben den Zug- und/oder Druckmitteln zum Tordieren des Torsionskörpers um die gedachte Ausrichtachse Biegemittel umfasst, mit denen der Torsionskörper elastisch um eine winklig, vorzugsweise rechtwinklig, zur Ausrichtachse verlaufende Biegeachse biegbar ist. Anders ausgedrückt umfasst die Laserausrichtvorrichtung vorzugsweise als Zug- und/oder Druckmittel ausgebildete Biegemittel, mit welchen der Torsionskörper elastisch zusammen mit den darin bzw. daran angeordneten Zug- und/oder Druckmitteln zum Tordieren des Torsionskörpers um eine Biegeachse elastisch gebogen werden kann, um somit einen weiteren Freiheitsgrad in der Einstellung der Haltemittel und damit der Laserstrahlachse anzubieten. Bevorzugt sind die Biegemittel dabei derart ausgebildet, dass zwei Abschnitte des einteiligen Torsionskörpers auf Zug - und/oder auf Druck beanspruchbar sind, insbesondere in einem zu der gedachten Biegeachse beabstandeten Bereich, um eine Biegung des Torsionskörpers um die gedachte Biegeachse zu erreichen. Dabei sind die Biegemittel bevorzugt derart ausgebildet, dass das Biegemaß stufenlos einstellbar ist.

Ganz besonders bevorzugt ist dabei eine Ausführungsform, bei der die Biegeachse sowohl rechtwinklig zur Ausrichtachse verläuft als auch rechtwinklig zu der senkrecht zu der Ausrichtachse verlaufenden Halteachse, die bevorzugt die Laserstrahlrichtung angibt bzw. die bevorzugt mit einer Längsmittelachse eines in den Haltemitteln gehaltenen Lasers zusammenfällt.

Ganz besonders zweckmäßig ist es, wenn die Biegemittel, zumindest abschnittsweise in einen Bereich entlang der Ausrichtachse zwischen den Zug - und/oder Druckmitteln zum Tordieren des Torsionskörpers und Fixiermitteln zur Fixierung der Vorrichtung, beispielsweise an einem Stativ, etc. angeordnet sind. Auf diese Weise lassen sich die Zug- und/oder Druckmittel gemeinsam mit den Haltemitteln um die Biegeachse verschwenken. Denkbar ist auch eine Anordnung axial zwischen den Zug- und/oder Druckmitteln und den Haltemitteln.

Im Hinblick auf die konkrete Ausführung der Biegemittel gibt es unterschiedliche Möglichkeiten. Bevorzugt sind diese derart ausgebildet, dass sie zumindest abschnittsweise in einer Aussparung angeordnet sind, vorzugsweise diese durchsetzen. Bevorzugt sind mittels einer Muttern-Gewindestangenkombination einander gegenüberliegende Seitenwände der Aussparung aufeinander zu und/oder voneinander weg verstellbar sind, wobei zum voneinander weg Verstellen der Seitenwände bevorzugt in der Aussparung zwei in einander entgegengesetzten Axialrichtungen verschraubbare Muttern auf einer Gewindestange angeordnet sind. Bevorzugt ist in einer zu der vorgenannten, bevorzugt nutartigen, Aussparung benachbarten Aussparung (Vertiefung) eine zusätzliche Mutter angeordnet, um so die Seitenwände nicht nur voneinander wegdrücken, sondern auch aufeinander zuziehen zu können. Besonders zweckmäßig ist es, wenn Mittel vorgesehen sind, um ein Mitdrehen der Gewindestange zu verhindern, wenn der Torsionskörper durch Verdrehen einer Mutter auf Biegung beansprucht wird. Grundsätzlich ist es möglich die Gewindestange, beispielsweise durch Verkleben, drehfest am Torsionskörper festzulegen. Besonders bevorzugt ist eine Ausführungsform, bei der der Gewindestange zur drehfesten Lagerung eine Kontermutter zugeordnet ist, die sich noch weiter bevorzugt mit einer Mutter zum Beanspruchen des Torsionskörpers auf Biegung, insbesondere zum Auseinanderdrücken zweier Abschnitte des Torsionskörpers, in einer gemeinsamen Aussparung befindet.

Die Erfindung führt auch auf ein Lasersystem, d.h. eine nach dem Konzept der Erfindung ausgebildete Laserausrichtvorrichtung mit einem von den Haltemitteln gehaltenen, insbesondere stabförmigen Laser, wobei ein ausgesandter Laser eine Laserstrahlrichtung bzw. Laserstrahlachse definiert, die vorzugsweise winklig, insbesondere senkrecht zur Ausrichtachse (Torsionsachse) des Torsionskörpers verläuft.

Zudem führt die Erfindung auf die Verwendung eines Torsionskörpers sowie von Zug- und/oder Druckmitteln zum Ausrichten (Feinjustierung) eines, vorzugsweise in Haltemitteln gehaltenen, Lasers, wobei der Torsionskörper mindestens zwei Abschnitte aufweist, die mit Hilfe der Zug- und/oder Druckmittel derart kraftbeaufschlagbar sind, dass eine Torsion des Torsionskörpers um eine gedachte Ausrichtachse resultiert.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 bis 4: klapprichtige Darstellungen einer bevorzugten einteiligen Ausführungsform einer Laserausrichtvorrichtung,
- Fig. 5: eine alternative Ausführungsform einer Laserausrichtvorrichtung, bei der zusätzlich zu Zug- und/oder Druckmitteln (Tordiermitteln) Biegemittel zum elastischen Biegen des Torsionskörpers vorgesehen sind, wobei die Biegemittel, ebenso wie die Tordiermittel aus Übersichtlichkeitsgründen nicht eingezeichnet sind, und
- Fig. 6: eine perspektivische Ansicht der Ausführungsform gemäß Fig. 5, wobei dort sowohl die Tordiermittel als auch die Biegemittel dargestellt sind.

In den Figuren sind gleiche Elemente und Elemente mit der gleichen Funktion mit den gleichen Bezugszeichen gekennzeichnet.

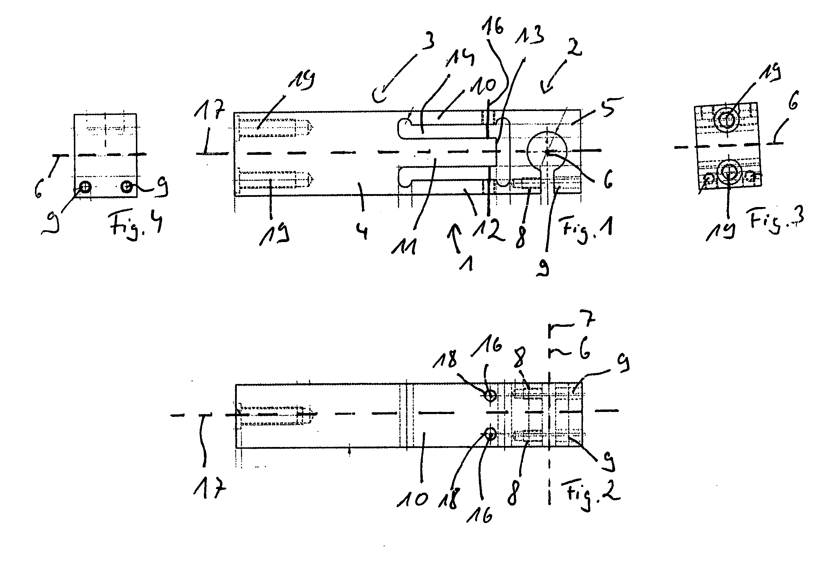

In den Fig. 1 bis 4 ist eine Laserausrichtvorrichtung 1 gezeigt. Diese umfasst Haltemittel 2, die in dem gezeigten Ausführungsbeispiel zum klemmenden Halten eines vorzugsweise zylindrischen, stabförmigen, nicht dargestellten Lasers ausgebildet sind. Neben den Haltemitteln 2 umfasst die Laserausrichtvorrichtung 1 Ausrichtmittel 3 zum Feinjustieren des Lasers bzw. der Haltemittel. Die Ausrichtmittel 3 wiederum umfassen dabei einen Torsionskörper 4, der in dem gezeigten Ausführungsbeispiel mit einem Klemmkörper 5 bzw. Klemmabschnitt der Haltemittel 2 einteilig aus einem Metallblock ausgebildet sind. Die Haltemittel 2 definieren eine Halteachse 6 (Längsachse der Haltemittel), die bei einem stabförmigen Laser mit einer Laserstrahlrichtung 7 bzw. Laserstrahlachse zusammenfällt oder zu dieser parallel ausgerichtet ist. Ein nicht dargestellter Laser kann entlang der Halteachse 6 in den Klemmkörper 5 eingeschoben werden, woraufhin mit Hilfe von nichtdargestellten Klemmschrauben eine Klemmung zwischen dem Lasergehäuse und dem Klemmkörper 5 erzeugt wird.

Hierzu werden die Klemmschrauben in den Darstellungen gemäß den Fig. 1 und 2 von in der Zeichnungsebene rechts nach in der Zeichnungsebene links in eine entsprechende, in einem vorderen (inneren) Abschnitt mit Innengewinde 8 versehene Öffnungen 9 eingeschraubt. Zum Erzielen der Klemmwirkung ist der Klemmkörper 5 geschlitzt ausgeführt, wobei der Schlitz von den Klemmschrauben zur Variation der Schlitzbreite durchsetzt wird.

In dem gezeigten Ausführungsbeispiel umfasst der Torsionskörper 4 insgesamt drei relativ zueinander verstellbare Abschnitte, nämlich einen ersten Abschnitt 10, einen zweiten Abschnitt 11 sowie einen dritten Abschnitt 12, wobei der zweite Abschnitt 11 mittig zwischen den äußeren beiden Abschnitten 10, 12 aufgenommen ist. Zu erkennen ist, dass die Abschnitte 10, 11, 12 einteilig miteinander ausgebildet sind, und der mittlere, zweite Abschnitt 11 als eine Art Zunge ausgebildet ist und der Zeichnungsebene gemäß Fig. 1 rechts ein freies Ende 13 umfasst. Die Abschnitte 11, 12, 13 sind durch eine gemeinsame, hier U-förmige Aussparung 14 voneinander beabstandet, die beispielsweise durch spanende Bearbeitung oder gegebenenfalls mit Hilfe eines Laserstrahls in dem den Torsionskörper bildende Metallblock eingebracht wurde.

Mit Hilfe von lediglich angedeuteten Zug- und/oder Druckmitteln 15, hier in Form von Schraubelementen 16, kann der Torsionskörper 4 um eine Ausrichtachse 17 (Tordierachse) tordiert werden, wobei in dem gezeigten Ausführungsbeispiel die Ausrichtachse 17 senkrecht zur Halteachse 6 der Haltemittel 2 verläuft.

Wie sich insbesondere aus der Darstellung gemäß Fig. 2 ergibt, sind sowohl im ersten Abschnitt 10 als auch im zweiten Abschnitt 12 zwei voneinander beabstandete Innengewinde 18 vorgesehen, mit denen die Schraubelemente 16 verschraubbar sind. Dabei fluchtet jeweils ein Innengewinde 18 in ersten Abschnitt mit einem Innengewinde 18 im zweiten Abschnitt, sodass insgesamt zwei Paare von Innengewinden vorgesehen sind. Wie sich aus Fig. 2 ergibt, sind die Innengewinde radial versetzt zur Ausrichtachse 17 angeordnet, und zwar in dem gezeigten Ausführungsbeispiel jeweils gleichmäßig beabstandet von dieser. Die mit den Innengewinden 18 verschraubbaren, lediglich angedeuteten Schraubelemente 16 stützen sich in axialer Richtung auf den mittleren, zweiten Abschnitt 11 ab und können dieses mit einer Druckkraft beaufschlagen und verformen, sodass in Abhängigkeit des Verstellweges der Zug- und/oder Druckmittel eine Torsion des Torsionskörpers 4 um die Ausrichtachse 17 erreicht werden kann.

Gemäß einer alternativen, nicht dargestellten Ausführungsvariante greifen die Schraubelemente 16 in Innengewinde des zweiten Abschnittes 11 ein. Es ist nicht notwendig, jedoch bevorzugt, insgesamt drei Abschnitte 10, 11, 12 vorzusehen, grundsätzlich reicht das Vorsehen von zwei, bevorzugt über eine Aussparung voneinander beabstandeten Abschnitten im Torsionskörper zum Bewirken der gewünschten Verdrehung der Haltemittel 2 bzw. des Lasers bzw. der Laserrichtung 7 um die Ausrichtachse 17 aus.

Wie sich insbesondere aus der Darstellung gem. Fig. 1, 2 und 3 ergibt sind parallel zur Ausrichtachse 17 Fixiermittel 19 in Form Innengewindeöffnungen in dem Torsionskörper 4 vorgesehen, mit welchen die Laserausrichtvorrichtung 1 an einer geeigneten Haltevorrichtung fixierbar ist, wobei die nichtdargestellte Haltevorrichtung bevorzugt Mittel zur Grobausrichtung der Laserausrichtvorrichtung 1 umfasst.

Mit Hilfe der Zug- und/oder Druckmittel 15 muss nicht zwingend eine Torsion des Torsionskörpers 4 um die Ausrichtachse 17 erreicht werden. Werden beispielsweise beide in einem der Abschnitte 10, 12 gemeinsam gehaltenen Schraubelemente 16 gleichmäßig verstellt, so resultiert hieraus keine Torsion des Torsionskörpers 4 um die Ausrichtachse 17, die gleichzeitig eine Längsachse des Torsionskörpers 4 darstellt, sondern vielmehr wird die Laserstrahlrichtung 7 bzw. die Halteachse 6 parallel verschoben.

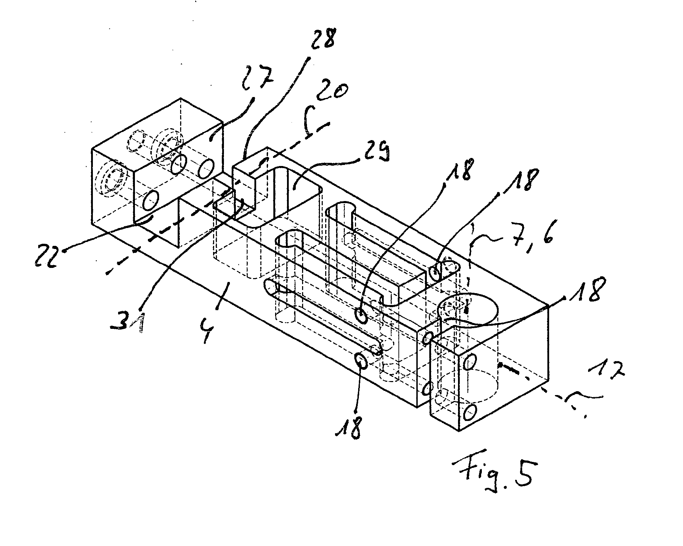

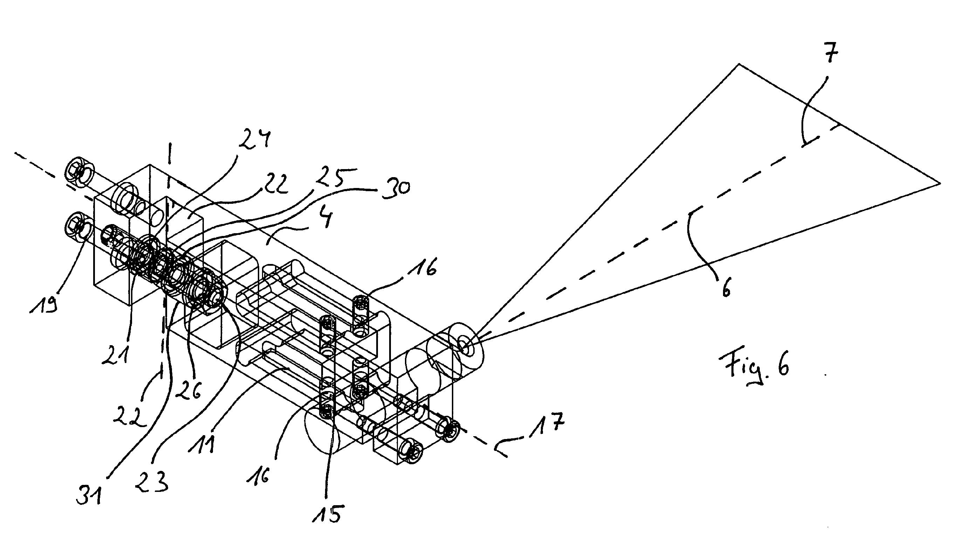

Im Folgenden wird das Ausführungsbeispiel einer Laserausrichtvorrichtung gemäß den Fig. 5 und 6 erläutert, wobei zur Vermeidung von Wiederholungen im Wesentlichen nur auf die Unterschiede zu dem Ausführungsbeispiel gemäß den Fig. 1 bis 4 eingegangen wird. Im Hinblick auf die Gemeinsamkeiten wird auf die Fig.1 bis 4 mit zugehöriger Figurenbeschreibung verwiesen.

Wie den Fig. 5 und 6 zu entnehmen ist, stimmt der Aufbau der Tordiermittel mit dem zuvor erläuterten Ausführungsbeispiel überein. Im Unterschied zu dem vorstehenden Ausführungsbeispiel ist der Torsionskörper 4 um eine (zusätzliche) Biegeachse 20 elastisch biegbar, wobei die Biegeachse 20 in einem Ausgangszustand, bei dem keine Verbiegung über die Zug- und Druckmittel 15 gegeben ist, rechtwinklig zur Ausrichtachse 17 verläuft als auch rechtwinklig zu der die Laserstrahlrichtung 7 bestimmenden Halteachse 6. Es ist auch eine alternative Anordnung denkbar, bei der die Biegeachse 20 parallel zu der Halteachse 6 verläuft.

Wie aus Fig. 6 zu erkennen ist, umfassen die Zug- und/oder Druckmittel 15 zum Tordieren des Torsionskörpers 4 insgesamt vier in jeweils einem Innengewinde 18 des Torsionskörpers 4 aufgenommene Schraubelemente 16, die sich mit ihren Schaftenden an dem zuvor erläuterten zweiten Abschnitt 11 (mittlerer Abschnitt) abstützen.

Wie sich aus Fig. 6 ergibt, befinden sich axial zwischen den Fixiermitteln 19 und den Zug- und/oder Druckmitteln 15 zum Tordieren des Torsionskörpers 4 Biegemittel 21, die sich abschnittsweise in einer Aussparung 22 befinden. Zu erkennen ist, dass die Tiefenerstreckung der Aussparung 22 größer ist als die halbe Dicke des Torsionskörpers 4, um somit ein vergleichsweise erleichtertes elastisches Verbiegen des einteiligen Torsionskörpers 4 zu ermöglichen.

Die Aussparung 22 ist als seitlich offene Nut ausgebildet, die sich quer zur Ausrichtachse 17 erstreckt. Parallel zur Ausrichtachse 17 ist die Aussparung 22 durchsetzt von einer Gewindestange 23, auf der insgesamt drei Muttern, 24, 25, 26 (Innengewindeelemente) sitzen. Zwei der Muttern 24, 25 befinden sich mit Axialabstand innerhalb der Aussparung 22. Die Mutter 24 hat die Aufgabe einer Kontermutter, um ein Verdrehen der Gewindestange bei Verdrehen einer der anderen Mutter 25, 26 zu verhindern. Die Mutter 25 kann derart gegen eine Seitenwand 28 verdreht werden, dass die zwei einander gegenüberliegenden Seitenwände 27, 28 druckbeaufschlagt werden, wodurch die über die Aussparung 22 voneinander beabstandeten Axialabschnitte des Torsionskörpers 4 um die Biegeachse 20 elastisch gebogen werden. Die in der später noch zu erläuternden, als Durchgangsöffnung ausgebildeten Vertiefung 29 angeordnete Mutter 26 dient dazu, die vorgenannten Seitenwände 27, 28 bei Bedarf aufeinander zu bewegen und so eine Biegung des Torsionskörpers 4 in die andere als die zuvor genannte Biegerichtung, also entgegengesetzt zu bewirken. Zuvor muss die Mutter 25 zunächst entsprechend gelöst werden, um ausreichend Axialverstellmöglichkeit zu bieten. Bevorzugt wird, unabhängig von der Biegerichtung nach einem Biegevorgang zur Vermeidung von Vibrationen mit der jeweils gegenüberliegenden Mutter 24, 25 bzw. 25, 24 gekontert.

Wie sich aus den Fig. 5 und 6 ergibt, ist zusätzlich zu der Aussparung 28 eine in vorteilhafter Weise als Durchgangsöffnung ausgebildete Vertiefung 29 vorgesehen, die über einen, eine Zwischenwand 30 durchsetzenden Kanal 31 mit der Aussparung 22 verbunden ist. Die Vertiefung 29 ist so dimensioniert, dass sie zum einen die Mutter 26 aufnehmen kann und zudem die Mutter 26 mit einem entsprechenden Werkzeug zum Biegen des Torsionskörpers 4 verdreht werden kann. Im montierten Zustand der Biegemittel 21 ist dieser Kanal 31 durchsetzt von der Gewindestange 23, wobei die Zwischenwand 30 auf Seiten der Vertiefung 29 als axiale Abstützfläche für die Mutter 26 dient, die den Kanalquerschnitt seitlich überragt. Zur Minimierung des Verschleißes und zur erleichterten Verdrehbarkeit der Muttern 24, 25, 26 ist jeder Mutter, 24, 25, 26 (Schraubelemente) eine fakultative Gewindescheibe (ohne Bezugszeichen) zugeordnet, wobei die jeweilige Gewindescheibe sich zwischen der zugehörigen Mutter und einer Seitenwand 27, 28 bzw. der von der Zwischenwand 30 gebildeten Innenwand bzw. Innenseite der Vertiefung 29 befindet. Durch relatives Verdrehen der Muttern 24, 25, 26 kann bei der gezeigten Konstruktion, bei welcher sich die Mutter 26 an der Zwischenwand 30 in der Vertiefung 29 abstützt eine Zugbelastung auf die Zwischenwand 30 aufgebracht werden, wodurch insgesamt der Torsionskörper 4 in zwei einander entgegengesetzte Biegerichtungen um die Biegeachse 20 elastisch biegbar ist.

### Bezugszeichenliste

- 1: Laserausrichtvorrichtung
- 2: Haltemittel
- 3: Ausrichtmittel
- 4: Torsionskörper
- 5: Klemmkörper
- 6: Halteachse
- 7: Laserstrahlrichtung
- 8: Innengewinde
- 9: Öffnungen
- 10: erster Abschnitt
- 11: zweiter Abschnitt
- 12: dritter Abschnitt
- 13: freies Ende
- 14: Aussparung
- 15: Zug- und Druckmittel
- 16: Schraubelement
- 17: Ausrichtachse
- 18: Innengewinde
- 19: Fixiermittel
- 20: Biegeachse
- 21: Biegemittel
- 22: Aussparung
- 23: Gewindestange
- 24: Mutter
- 25: Mutter
- 26: Mutter
- 27: Seitenwand
- 28: Seitenwand
- 29: Vertiefung
- 30: Zwischenwand
- 31: Kanal

## Patentansprüche

1. Laserausrichtvorrichtung (1), umfassend Haltemittel (2) zum Halten eines Lasers sowie Ausrichtmittel (3) zum Justieren der Haltemittel (2),
**dadurch gekennzeichnet,**
**dass** die Haltemittel (2) einen Torsionskörper (4) sowie Zug- und/oder Druckmittel (15) umfassen mit denen mindestens zwei Abschnitte des Torsionskörpers (4) durch Kraftbeaufschlagung so relativ zueinander verformbar sind, dass der Torsionskörper (4) um eine gedachte Ausrichtachse (17) tordierbar ist.

2. Vorrichtung nach Anspruch 1,
**dadurch gekennzeichnet,**
**dass** die Zug- und/oder Druckmittel (15) derart angeordnet sind, dass mit diesen die Haltemittel (2) parallel verstellbar sind.

3. Vorrichtung nach einem der Ansprüche 1 oder 2,
**dadurch gekennzeichnet,**
**dass** der Torsionskörper (4) einstückig, insbesondere aus Metall, bevorzugt einer Aluminiumlegierung, ausgebildet ist.

4. Vorrichtung nach einem der vorgehenden Ansprüche,
**dadurch gekennzeichnet,**
**dass** die Ausrichtachse (17) winklig, insbesondere unter einem Winkel zwischen 45° und 90°, vorzugsweise senkrecht, zu einer eine Laserstrahlrichtung (7) bestimmenden Halteachse (6) der Haltemittel (2) verläuft.

5. Vorrichtung nach einem der vorhergehenden Ansprüche,
**dadurch gekennzeichnet,**
**dass** die Zug- und/oder Druckmittel (15) an zumindest einem der Abschnitte außerhalb einer die Ausrichtachse (17) aufnehmenden Ebene, vorzugsweise Symmetrieebene, angreifen.

6. Vorrichtung nach einem der vorhergehenden Ansprüche,
**dadurch gekennzeichnet,**
**dass** die Zug- und/oder Druckmittel (15) mindestens ein Schraubelement (16) umfassen, dass in einem ersten Gewinde eines ersten Abschnittes (10) der Abschnitte verschraubbar ist und sich an dem zweiten Abschnitt (11) der Abschnitte zum Beaufschlagen mit einer Druckkraft abstützt, oder dass mit einem zweiten Gewinde des zweiten Abschnittes (11) zum Beaufschlagen mit einer Druck- oder Zugkraft zusammenwirkt.

7. Vorrichtung nach Anspruch 6,
**dadurch gekennzeichnet,**
**dass** mindestens zwei voneinander beabstandete Schraubelemente (16), vorzugsweise vier voneinander beabstandete Schraubelemente (16), vorgesehen sind.

8. Vorrichtung nach einem der vorhergehenden Ansprüche,
**dadurch gekennzeichnet,**
**dass** drei, vorzugsweise parallele, Abschnitte (10, 11, 12) vorgesehen sind.

9. Vorrichtung nach einem der vorhergehenden Ansprüche,
**dadurch gekennzeichnet,**
**dass** die Abschnitte (10, 11, 12) fest miteinander verbunden, vorzugsweise einteilig ausgebildet, und über mindestens eine, vorzugsweise ausschließlich eine, bevorzugt U-förmige Aussparung (14) voneinander beabstandet sind.

10. Vorrichtung nach einem der vorhergehenden Ansprüche,
**dadurch gekennzeichnet,**
**dass** die Haltemittel (2) einteilig mit dem Torsionskörper (4) ausgebildet oder unbeweglich an diesem fixierbar sind.

11. Vorrichtung nach einem der vorhergehenden Ansprüche,
**dadurch gekennzeichnet,**
**dass** an den Haltemitteln ein, insbesondere stabförmiger, Laser fixierbar und/oder fixiert ist.

12. Vorrichtung nach einem der vorhergehenden Ansprüche,
**dadurch gekennzeichnet,**
**dass** dem Torsionskörper (4) Biegemittel (21) zugeordnet sind, mit denen der Torsionskörper (4) elastisch um eine winklig, vorzugsweise rechtwinklig, zur Ausrichtachse (17) verlaufende Biegeachse (20) biegbar ist.

13. Vorrichtung nach Anspruch 12,
**dadurch gekennzeichnet,**
**dass** die Biegemittel (21) in einem Bereich axial zwischen den Zug - und/oder Druckmitteln und Fixiermitteln (19) zur Fixierung der Vorrichtung angeordnet sind.

14. Vorrichtung nach einem der Ansprüche 12 oder 13,
**dadurch gekennzeichnet,**
**dass** die Biegemittel (21) zumindest abschnittsweise in einer Aussparung (22) angeordnet sind, und dass, insbesondere mittels mindestens eines Schraubelements (24, 25, 26), einander gegenüberliegende Seitenwände (27, 28) der Aussparung (22) aufeinander zu und/oder voneinander weg verstellbar sind.

15. Verwendung von einen Torsionskörper sowie Zug- und/oder Druckmittel, zum Justieren eines, vorzugsweise in Haltemitteln gehaltenen, Lasers, wobei mindestens zwei Abschnitte des Torsionskörpers durch Kraftbeaufschlagung so relativ zueinander verstellbar sind, dass eine Torsion des Torsionskörpers um eine gedachte Ausrichtachse resultiert.

16. Verfahren zum Justieren eines in Haltemitteln (2) einer Laserausrichtvorrichtung (1), vorzugsweise nach einem der Ansprüche 1 bis 14, gehaltenen Lasers,
**gekennzeichnet durch**
Tordieren eines Tordierköpers (4) der Haltemittel (2) um eine gedachte Ausrichtachse (17) und **dadurch** Verstellen einer eine Laserstrahlrichtung (7) bestimmenden Halteachse (6) der Haltemittel (2).

17. Verfahren nach Anspruch 16,
**dadurch gekennzeichnet,**
**dass** der Tordierkörper (4) durch Betätigen von Zug- und/oder Druckmitteln (15), vorzugsweise elastisch, tordiert und in dem tordierten Zustand gehalten wird.

18. Verfahren nach Anspruch 17
**dadurch gekennzeichnet,**
**dass** durch Betätigen von Zug- und/oder Druckmitteln zwei Abschnitte des Torsionskörpers relativ zueinander, vorzugsweise elastisch, verformt und in dem verformten Zustand gehalten werden.

## Claims

1. Laser orientation device (1), comprising holding means (2) for holding a laser and orientation means (3) for adjusting the holding means (2), **characterised in that** the holding means (2) comprise a torsion body (4) and pulling and/or pushing means (15) by means of which at least two portions of the torsion body (4) can be deformed relative to one another by application of a force in such a way that the torsion body (4) can be twisted about an imaginary orientation axis (17).

2. Device according to claim 1, **characterised in that** the pulling and/or pushing means (15) are arranged such that the holding means (2) can be displaced in parallel thereby.

3. Device according to either claim 1 or claim 2, **characterised in that** the torsion body (4) is formed in one piece, in particular from metal, preferably an aluminium alloy.

4. Device according to any of the preceding claims, **characterised in that** the orientation axis (17) extends at an angle, in particular at an angle of between 45° and 90°, preferably perpendicular, to a holding axis (6), determining a laser beam direction (7), of the holding means (2).

5. Device according to any of the preceding claims, **characterised in that** the pulling and/or pushing means (15) act on at least one of the portions outside a plane, preferably a plane of symmetry, containing the orientation axis (17).

6. Device according to any of the preceding claims, **characterised in that** the pulling and/or pushing means (15) comprise at least one screw element (16) which can be screwed in a first thread of a first portion (10) of the portions and is supported on the second portion (11) of the portions for application of a compressive force, or which interacts with a second thread of the second portion (11) for application of a compressive or tensile force.

7. Device according to claim 6, **characterised in that** at least two screw elements (16) which are spaced apart, preferably four screw elements (16) which are spaced apart (16), are provided.

8. Device according to any of the preceding claims, **characterised in that** three, preferably parallel, portions (10, 11, 12) are provided.

9. Device according to any of the preceding claims, **characterised in that** the portions (10, 11, 12) are rigidly interconnected, preferably formed in one piece, and are spaced apart via at least one, preferably only one, preferably U-shaped recess (14).

10. Device according to any of the preceding claims, **characterised in that** the holding means (2) are formed in one piece with the torsion body (4) or can be immovably fixed thereto.

11. Device according to any of the preceding claims, **characterised in that** an in particular rod-shaped laser can be fixed and/or is fixed to the holding means.

12. Device according to any of the preceding claims, **characterised in that** bending means (21), by means of which the torsion body (4) can be bent elastically about a bending axis (20) which extends at an angle, preferably at a right angle, to the orientation axis (17), are associated with the torsion body (4).

13. Device according to claim 12, **characterised in that** the bending means (21) are arranged in a region axially between the pulling and/or pushing means and fixing means (19) for fixing the device.

14. Device according to either claim 12 or claim 13, **characterised in that** the bending means (21) are arranged in a recess (22), at least in portions, and **in that**, in particular by means of at least one screw element (24, 25, 26), mutually opposing side walls (27, 28) of the recess (22) can be displaced towards one another and/or away from one another.

15. Use of a torsion body and pulling and/or pushing means to adjust a laser which is preferably held in holding means, wherein at least two portions of the torsion body can be displaced relative to one another by application of a force in such a way that torsion of the torsion body about an imaginary orientation axis results.

16. Method for adjusting a laser held in holding means (2) of a laser orientation device (1), preferably according to any of claims 1 to 14, **characterised by** twisting a twist body (4) of the holding means (2) about an imaginary orientation axis (17) and thereby displacing a holding axis (6), determining a laser beam direction (7), of the holding means (2).

17. Method according to claim 16, **characterised in that**, by actuation of pulling and/or pushing means (15), the twist body (4) is twisted, preferably elastically, and held in the twisted state.

18. Method according to claim 17, **characterised in that**, by actuation of pulling and/or pushing means, two portions of the torsion body are deformed relative to one another, preferably elastically, and are held in the deformed state.

## Revendications

1. Dispositif d'alignement de laser (1), comprenant des moyens de maintien (2) pour maintenir un laser ainsi que des moyens d'alignement (3) pour l'ajustement des moyens de maintien (2), **caractérisé en ce que** les moyens de maintien (2) comprennent un corps de torsion (4) ainsi que des moyens de traction et/ou de compression (15), avec lesquels au moins deux parties du corps de torsion (4) peuvent être déformées l'une par rapport à l'autre par l'action de forces, de telle manière que le corps de torsion (4) puisse être tordu autour d'un axe d'alignement imaginaire (17).

2. Dispositif selon la revendication 1, **caractérisé en ce que** les moyens de traction et/ou de compression (15) sont disposés de telle manière que les moyens de maintien (2) soient réglables avec ceux-ci en parallèle.

3. Dispositif selon l'une des revendications 1 ou 2, **caractérisé en ce que** le corps de torsion (4) est réalisé en une seule pièce, en particulier en métal, de préférence en un alliage d'aluminium.

4. Dispositif selon l'une quelconque des revendications précédentes, **caractérisé en ce que** l'axe d'alignement (17) est incliné, en particulier sous un angle compris entre 45° et 90°, de préférence perpendiculaire, par rapport à un axe de maintien (6) des moyens de maintien (2) déterminant une direction (7) du faisceau laser.

5. Dispositif selon l'une quelconque des revendications précédentes, **caractérisé en ce que** les moyens de traction et/ou de compression (15) agissent sur au moins une des parties à l'extérieur d'un plan contenant l'axe d'alignement (17), de préférence un plan de symétrie.

6. Dispositif selon l'une quelconque des revendications précédentes, **caractérisé en ce que** les moyens de traction et/ou de compression (15) comprennent au moins un élément fileté (16), qui peut être vissé dans un premier filet d'une première partie (10) des parties et s'appuie sur la deuxième partie (11) des parties pour appliquer une force de compression, ou qui coopère avec un deuxième filet de la deuxième partie (11) pour appliquer une force de compression ou de traction.

7. Dispositif selon la revendication 6, **caractérisé en ce qu'**il est prévu au moins deux éléments filetés (16) espacés l'un de l'autre, de préférence quatre éléments filetés (16) espacés les uns des autres.

8. Dispositif selon l'une quelconque des revendications précédentes, **caractérisé en ce qu'**il est prévu trois parties (10, 11, 12), de préférence parallèles.

9. Dispositif selon l'une quelconque des revendications précédentes, **caractérisé en ce que** les parties (10, 11, 12) sont fermement reliées les unes aux autres, et sont de préférence réalisées d'une seule pièce, et sont espacées les unes des autres par au moins un, de préférence exclusivement un évidement (14), de préférence en forme de U.

10. Dispositif selon l'une quelconque des revendications précédentes, **caractérisé en ce que** les moyens de maintien (2) sont réalisés en une seule pièce avec le corps de torsion (4) ou peuvent être fixés de façon immobile sur celui-ci.

11. Dispositif selon l'une quelconque des revendications précédentes, **caractérisé en ce qu'**un laser, en particulier en forme de barreau, peut être et/ou est fixé sur les moyens de maintien.

12. Dispositif selon l'une quelconque des revendications précédentes, **caractérisé en ce que** des moyens de flexion (21) sont associés au corps de torsion (4), avec lesquels le corps de torsion (4) est flexible élastiquement autour d'un axe de flexion (20) s'étendant sous un angle, de préférence un angle droit, par rapport à l'axe d'alignement (17).

13. Dispositif selon la revendication 12, **caractérisé en ce que** les moyens de flexion (21) sont disposés dans une région située axialement entre les moyens de traction et/ou de compression et des moyens de fixation (19) pour la fixation du dispositif.

14. Dispositif selon l'une des revendications 12 ou 13, **caractérisé en ce que** les moyens de flexion (21) sont disposés au moins en partie dans une découpe (22), et **en ce que** des parois latérales opposées l'une à l'autre (27, 28) de la découpe (22) peuvent être rapprochées l'une de l'autre et/ou écartées l'une de l'autre, en particulier au moyen d'au moins un élément fileté (24, 25, 26).

15. Utilisation d'un corps de torsion ainsi que de moyens de traction et/ou de compression pour l'ajustement d'un laser, de préférence maintenu dans des moyens de maintien, dans laquelle au moins deux parties du corps de torsion peuvent être réglées l'une par rapport à l'autre par application de force, de telle manière qu'il en résulte une torsion du corps de torsion autour d'un axe d'alignement imaginaire.

16. Procédé pour l'ajustement d'un laser maintenu dans des moyens de maintien (2) d'un dispositif d'alignement de laser (1), de préférence selon l'une quelconque des revendications 1 à 14, **caractérisé par** la torsion d'un corps de torsion (4) des moyens de maintien (2) autour d'un axe d'alignement imaginaire (17) et le réglage consécutif d'un axe de maintien (6) des moyens de maintien (2) déterminant une direction (7) du faisceau laser.

17. Procédé selon la revendication 16, **caractérisé en ce que** l'on tord le corps de torsion (4), de préférence de façon élastique, en actionnant des moyens de traction et/ou de compression (15) et on le maintient à l'état tordu.

18. Procédé selon la revendication 17, **caractérisé en ce que** l'on déforme deux parties du corps de torsion l'une par rapport à l'autre, de préférence de façon élastique, en actionnant des moyens de traction et/ou de compression, et on les maintient à l'état déformé.
